# EUROPÄISCHE PATENTSCHRIFT

(11) **EP 1 045 998 B1**
(45) Veröffentlichungstag und Bekanntmachung des Hinweises auf die Patenterteilung: **08.01.2003**
(21) Anmeldenummer: 99944270.0
(22) Anmeldetag: 02.07.1999
(51) Int. Cl.: F16H 1/32

(54) **EXZENTERZAHNRADGETRIEBE**
ECCENTRIC TOOTHED GEARING
TRANSMISSION A ENGRENAGES A EXCENTRIQUE

(30) Priorität: 05.11.1998 DE 19850908
(43) Veröffentlichungstag der Anmeldung: 25.10.2000
(73) Patentinhaber: ROBERT BOSCH GMBH, 70442 Stuttgart (DE)
(72) Erfinder: MOSKOB, Frank, D-76131 Karlsruhe (DE)
(86) Internationale Anmeldenummer: DE9902048
(87) Internationale Veröffentlichungsnummer: WO00028238

(56) Entgegenhaltungen:
- EP-A- 0 840 037
- DE-A- 4 127 051
- DE-U- 9 116 261
- FR-A- 2 641 351
- US-A- 1 645 510
- US-A- 2 380 776

## Beschreibung

### Stand der Technik

Die Erfindung betrifft ein Exzenterzahnradgetriebe zur Übersetzung der Drehbewegung von Verstellmotoren.

Ein Getriebe mit den Merkmalen des Oberbegriffs von Anspruch 1 ist aus dem DE-U-91 16 261 bekannt, bei dem die Führungselemente in Ausnehmungen eines Lagerschildes, der massiv ausgebildet ist, geführt sind.

Zur Drehzahlreduzierung von Verstellmotoren mit einer Ankerdrehzahl von etwa 7000 Umdrehungen pro Minute werden in der Regel Schneckengetriebe eingesetzt. Die eingesetzten Schnekkengetriebe, die von Elektromotoren angetrieben werden, zeichnen sich dadurch aus, daß sie eine Selbsthemmung von der Abtriebsseite her aufweisen. Wegen des zur Erzielung ausreichender Drehmomente notwendigen großen Übersetzungsverhältnisses, beispielsweise zum Antrieb als Fensterheber oder eines Schiebedaches in einem Kraftfahrzeug, sind die Außenabmessungen eines aus Motor und nebenliegend angeordneten Getriebe bestehenden Verstellmotors beträchtlich.

### Vorteile der Erfindung

Das erfindungsgemäße Exzenterzahnradgetriebe mit den Merkmalen des Hauptanspruchs hat den Vorteil, daß es bei sehr kompakten Abmessungen eine Selbsthemmung und einen einfachen Aufbau aufweist. Gegenüber den bekannten Schneckengetrieben ist das Exzenterzahnradgetriebe vergleichsweise toleranzunempfindlich, da alle rotierenden Teile auf einer Achse gelagert sind.

Wesentlicher Bestandteil des Exzenterzahnradgetriebes ist ein Exzenterrad, welches konstruktionsbedingt zwei unterschiedliche Bewegungen ausführen kann. Dies ist zum einen ein Abrollen an einer Außenverzahnung eines Mitnehmers, was zu einer kreisförmigen Bewegung um einen zur Achse des Exzenterrades exzentrischen Drehpunkt führt ("Taumelbewegung"), zum anderen eine Drehung um sich selbst. Die Verdrehung um sich selbst ist unerwünscht und wird durch Führungselemente am Exzenterrad verhindert, welche in entsprechende Aufnehmungen eines fest mit dem Gehäuse verbundenen Gehäuseteils ragen.

Die kreisförmige Bewegung des Exzenterrades kann in zwei lineare, zueinander senkrechte Bewegungen aufgeteilt werden. Diese beiden linearen Bewegungskomponenten werden bei dem erfindungsgemäßen Getriebe von einem einzigen Teil aufgenommen, während sie bei herkömmlichen Lösungen von zwei separaten Teilen aufgenommen werden. Durch die einstückige Ausführung des die kreisförmigen Bewegungen des Exzenterrades aufnehmenden Gehäuseteils reduzieren sich zum einen die Herstellungskosten, zum anderen sinkt der Montageaufwand. Beides ist vorteilhaft.

Der besondere Vorteil der einteiligen Ausführung des Gehäuseteils sowie der schwingfähigen Anordnung der Aufnehmungen liegt darin, daß die Wechselwirkung zwischen den Führungselementen des Exzenterrades und den Aufnehmungen des Gehäuseteils völlig reibungs- und somit auch verschleißfrei geschieht. Dies garantiert eine entsprechend hohe Lebenserwartung des erfindungsgemäßen Exzenterzahnradgetriebes.

Durch die in den Unteransprüchen aufgeführten Merkmale sind vorteilhafte Weiterbildungen des Exzenterzahnradgetriebes nach dem Hauptanspruch möglich.

So ist das Gehäuseteil vorteilhafterweise aus drei miteinander verbundenen Bereichen aufgebaut und weist einen inneren Bereich mit Aufnehmungen, einen mittleren Bereich und einen fest mit dem Gehäuse verbundenen äußeren Bereich auf, wobei der innere Bereich und der mittlere Bereich gegenüber dem äußeren Bereich schwingfähig angeordnet ist. Das Zusammenwirken der am Exzenterrad angebrachen Führungselemente mit den Aufnehmungen am inneren Bereich des Gehäuseteils bewirkt die vorteilhafte Führung des Exzenterrades.

Durch die Verbindung des inneren Bereichs mit dem mittleren Bereich bzw. des mittleren Bereichs mit dem äußeren Bereich über deformierbare Bereiche erhält man den Vorteil, daß die für den Betrieb des Exzenterradgetriebes notwendige kreisförmige Bewegung des Exzenterrades um eine Mittellage herum gewährleistet bleibt.

Den eingangs erwähnten Vorteil der Einstückigkeit gewinnt man konstruktiv dadurch, daß die deformierbaren Bereiche durch Aussparungen gebildet werden. Somit kann das komplette Gehäuseteil im Spritzgußverfahren als ein einziges Teil in einer entsprechenden Form hergestellt werden.

Eine längliche Ausdehnung der deformierbaren Bereiche ist deshalb vorteilhaft, weil dann bei minimaler Belastung des Materials die notwendige Deformation bzw. Auslenkung der deformierbaren Bereiche gewährleistet bleibt.

Wenn die deformierbaren Bereiche zwischen dem inneren Bereich und dem mittleren Bereich und die deformierbaren Bereiche zwischen dem mittleren Bereich und dem äußeren Bereich quer zueinander angeordnet sind, dann ergibt sich der Vorteil, daß die kreisförmige Bewegung des Exzenterrades exakt in die beiden zueinander senkrechten Linearkomponenten dieser Bewegung getrennt wird. Somit werden die entstehenden Kräfte gleichmäßig auf das Gehäuseteil bzw. auf die deformierbaren Bereiche aufgeteilt.

Durch Verjüngungen an den Enden der deformierbaren Bereiche kann deren Elastizität bzw. deren Federkonstanten den jeweiligen Anforderungen entsprechend eingestellt werden.

In einer weiteren vorteilhaften Ausführung der Erfindung ist das Gehäuseteil aus lediglich zwei miteinander verbundenen Bereichen aufgebaut und weist einen inneren Bereich und einen fest mit dem Gehäuse verbundenen äußeren Bereich auf, wobei hier der innere Bereich gegenüber dem äußeren Bereich schwingfähig angeordnet ist, und die Aufnehmungen schwingfähig gegen den inneren Bereich angeordnet sind.

Durch die Verbindung des inneren Bereichs mit dem äußeren Bereich bzw. der Aufnehmungen mit dem inneren Bereich über deformierbare Bereiche erhält man genau wie bei der ersten Variante den Vorteil, daß die für den Betrieb eines Exzenterradgetriebes notwendige kreisförmige Bewegung des Exzenterrades um eine Mittellage herum gewährleistet bleibt.

Besonders vorteilhaft ist hierbei, daß die deformierbaren Bereiche alle gleichlang und gleichweit vom Mittelpunkt enfernt sind und somit einer gleichmäßigen Belastung ausgesetzt werden.

Die Bildung der deformierbaren Bereiche durch Aussparungen, die längliche Ausdehnung sowie die Anordnung der mit den Aufnehmungen verbundenen deformierbaren Bereiche quer zu den nicht mit den Aufnehmungen verbundenen Bereiche ziehen die schon vorhergehend erwähnten Vorteile nach sich.

### Zeichnung

In der Zeichnung sind zwei Ausführungsbeispiele einer erfindungsgemäßen Vorrichtung dargestellt und in der nachfolgenden Beschreibung näher erläutert.

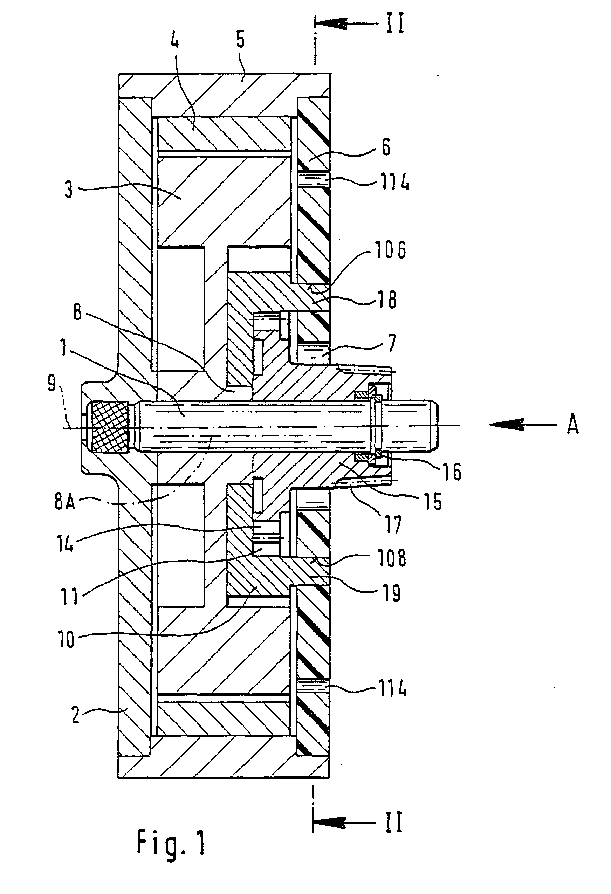

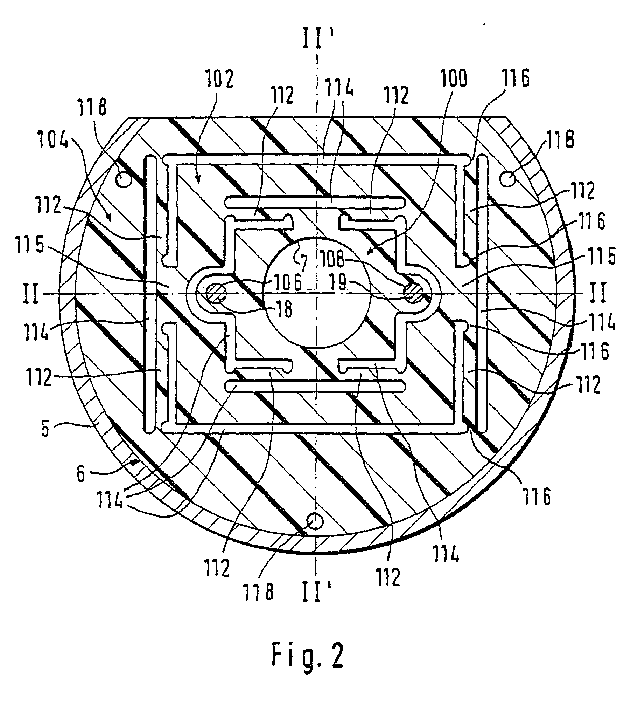

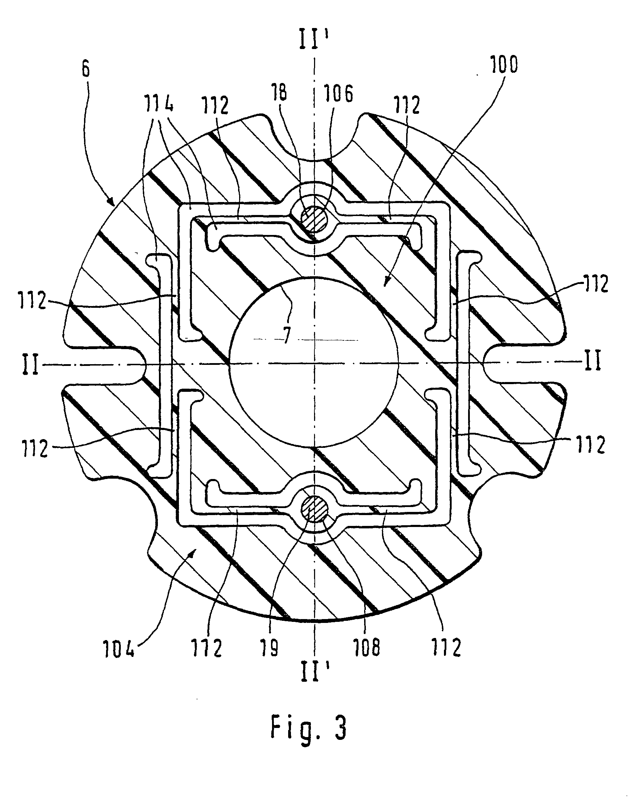

Es zeigen Figur 1 ein Exzenterzahnradgetriebe im Längsschnitt, Figur 2 eine Draufsicht entlang der Linie II-II aus Figur 1 in Richtung des Pfeiles A und Figur 3 ein zweites Ausführungsbeispiel in analoger Darstellung zu Figur 2.

### Beschreibung der Ausführungsbeispiele

Das in Figur 1 dargestellte Ausführungsbeispiel zeigt einen Elektromotor mit einem Exzenterzahnradgetriebe mit einer Achse 1, welche in einem Gehäuseboden 2 drehfest befestigt ist. Auf der Achse 1 ist ein Antrieb in Form eines Ankers 3 drehbar angeordnet, der durch Spulen 4 des Elektromotors angetrieben wird. Die Spulen 4 sind in einem zylindrischen Gehäuseabschnitt 5 innenliegend angeordnet, wobei an dem Gehäuseabschnitt 5 auch der Gehäuseboden 2 befestigt ist. Auf der dem Gehäuseboden 2 gegenüberliegenden Seite am Gehäuseabschnitt 5 ist ein Gehäuseteil 6 in Form eines Deckels mit einer zentralen Öffnung 7 fest angebracht. Durch diese zentrale Öffnung 7 ragt das dem Gehäuseboden 2 abgewandte Ende der Achse 1. Der Gehäuseabschnitt 5, der Gehäuseboden 2 und der Deckel 6 bilden ein Motorengehäuse, in dessen Inneren der auf der Achse 1 drehbare Anker 3 angeordnet ist, und der mit einem sich entlang der Mittelachse 9 axial erstreckendem Exzenter 8 mit seiner Exzenterachse 8A versehen ist. Auf dem Exzenter 8 ist ein Exzenterrad 10 drehbar gelagert, welches mit einer Innenverzahnung 11 versehen ist. An dem Exzenterrad 10 sind zwei Führungselemente in Form zweier Zapfen 18, 19 parallel zur Achse 1 befestigt, welche in zwei Aufnehmungen 106 und 108 im Gehäuseteil 6 ragen und darin fixiert sind.

Die Innenverzahnung 11 des Exzenterrads 10 greift abschnittsweise in eine Außenverzahnung 14 eines Mitnehmers 15 ein, der drehbar auf der Achse 1 gelagert und durch Befestigungsmittel 16 axial befestigt ist. Der Mitnehmer 15 ragt durch das Gehäuseteil 6 hindurch aus dem Motorgehäuse heraus und ist in diesem Bereich für den Getriebeausgang mit einer weiteren Außenverzahnung 17 versehen.

In Figur 2 ist das Gehäuseteil 6 in Draufsicht dargestellt, welches aus einem inneren Bereich 100, einem mittleren Bereich 102 und einem fest mit dem Gehäuseabschnitt 5 verbundenen äußeren Bereich 104 besteht. Dieses Gehäuseteil 6 ist das Führungselement für das Exzenterrad 10. Es ist einteilig aus einem elastischen Material, beispielsweise aus Kunststoff gespritzt. Es weist im inneren Bereich 100 Aufnahmebohrungen 106, 108 für die beiden Zapfen 18, 19 auf. Außerdem ist die zentrale Öffnung 7 am inneren Bereich 100 angeordnet, durch das das dem Gehäuseboden 2 abgewandte Ende der Achse 1 ragt. Die drei Bereiche des Gehäuseteils 6 sind über deformierbare Bereiche 112 einstückig miteinander verbunden.

Zum besseren Verständnis sei noch einmal kurz die Wirkungsweise eines Exzenterzahnradgetriebes erläutert. Durch das in den Spulen 4 induzierte Magnetfeld dreht sich der Anker 3 um die Achse 1, die mit dem Gehäuseboden 2 drehfest verbunden ist. Durch die Drehung des Ankers 3 dreht sich auch der Exzenter 8 um die Achse 1.

Das auf dem Exzenter 8 drehbar gelagerte Exzenterrad 10 würde sich mit seiner Innenverzahnung 11 an der Außenverzahnung 14 des Mitnehmers 15 abwälzen, kann selbst aber - bedingt durch die in den Aufnehmungen 106, 108 geführten Zapfen 18, 19 - keine Drehung um sich selbst durchführen, sodaß sich der ebenfalls drehbar mit der Achse 1 verbundenen Mitnehmer 15 mit seiner Verzahnung 14 auf der Innenverzahnung 11 abwälzt. Durch dieses Abwälzen des Mitnehmers 15 in dem Exzenterrad 10 erzielt man eine Untersetzung der Drehbewegung des Mitnehmers 15, die über die Außenverzahnung 17 des Mitnehmers 15 weitergeleitet wird.

Das Exzenterrad 10 vollführt folglich eine Kreisbewegung, die zu einer kreisförmigen Bewegung der beiden Zapfen 18, 19 führt, die das Gehäuseteil 6 gestatten muß.

Diese Bewegung kann in zwei radiale Bewegungen senkrecht zueinander aufgeteilt werden. Sie wird durch die deformierbaren Bereiche 112 ermöglicht und bewirkt die Auslenkung des die Aufnehmungen 106, 108 enthaltenden Gehäuseteils.

Die deformierbaren Bereiche 112 sind Stege, welche beidseitig durch Aussparungen 114 gebildet werden, die zwischen den zu verbindenden Bereichen 100, 102, 104 angeordnet sind. Gemäß Figur 2 weisen die Aussparungen 114 unterschiedliche Geometrien auf, wobei die Spiegelsymmetrie entlang der beiden senkrecht zueinander stehenden Achsen II-II und II'-II' entscheidend ist. Außerdem ist wichtig, daß die Breite der Aussparungen 114 mindestens so groß gewählt wird, daß die Auslenkungen der deformierbaren Bereiche 112 durch die Exzenterbewegung darin aufgenommen werden können und somit die Bereiche 112 nicht in ihrer Bewegung behindert werden.

Durch die Bildung der Aussparungen 114 in der in Figur 2 dargestellten Weise sind die deformierbaren Bereiche 112 zwischen dem inneren Bereich 100 und dem mittleren Bereich 102 und die deformierbaren Bereiche 112 zwischen dem mittleren Bereich 102 und dem äußeren Bereich 104 quer, also in einem Winkel von 90°, zueinander angeordnet sind. Diese Anordnung stellt eine ideale Geometrie für die Aufnahme der Exzenterbewegung des Exzenterrades 10 dar.

In Figur 3 ist das Gehäuseteil 6 eines zweiten Ausführungsbeispiels dargestellt, wobei gleiche Merkmale mit den gleichen Bezugszeichen wie in Figur 2 versehen sind.

Die deformierbaren, stegförmigen Bereiche 112 in Figur 3 werden ebenfalls durch beidseitige Aussparungen 114 gebildet, die zwischen den zu verbindenden Bereichen 100 und 104 angeordnet sind. Im Unterschied zum ersten Ausführungsbeispiel weist das zweite lediglich zwei Teilbereiche 100, 104 auf, und die beiden sich gegenüberliegenden Aufnehmungen 106, 108 sind nicht auf dem inneren Bereich 100, sondern über deformierbare, balkenähnliche Bereiche 112 am inneren Bereich schwingfähig angeordnet. Diese Anordnung ist quer zu den deformierbaren Bereichen 112, die den inneren Bereich 100 mit dem äußeren Bereich 104 verbinden. Somit wird auch hier eine exakte Trennung der kreisförmigen Bewegung des Exzenterrades 10 und eine erfindungsgemäß vorteilhafte Führung desselben erreicht.

Hinsichtlich der Geometrie gilt auch für das zweite Ausführungsbeispiel, daß die paarweise symmetrische Anordnung der von den Aussparungen 114 begrenzten Stege von entscheidender Bedeutung ist. Genauso ist die Breite der Aussparungen 114 den Auslenkungen entsprechend groß genug zu wählen.

Durch die Bildung der Aussparungen 114 in der oben beschriebenen Weise sind die deformierbaren Bereiche 112 zwischen dem inneren Bereich 100 und dem äußeren Bereich 104 und die deformierbaren Bereiche 112 zwischen dem inneren Bereich 100 und den Aufnehmungen 106, 108 quer zueinander angeordnet sind. Diese Anordnung stellt eine ideale Geometrie für die Aufnahme der Exzenterbewegung des Exzenterrades 10 dar.

Die beiden dargestellten Ausführungsbeispiele der Figur 2 und 3 können sehr einfach in einem Spritzgußverfahren hergestellt werden, außerdem können die deformierbaren Bereiche 112 zur Steigerung der Festigkeit mit Metalleinlegeteilen versehen werden.

Prinzipiell sind auch andere Geometrien der Aussparungen 114 denkbar, die beispielsweise zu deformierbaren Bereichen 112 in Form einer Ziehharmonika führen. Unabhängig von den dargestellten Ausführungsbeispielen ist wichtig, daß die Teilsysteme 100, 102, 104 verdrehsteif zueinander sind und die deformierbaren Bereiche 112 so ausgelegt sind, daß sie der zyklischen Bewegung des Exzenterrades 10 folgen können.

## Patentansprüche

1. Exzenterzahnradgetriebe, aufweisend einen Drehantrieb (3) mit einem Exzenter (8), einem auf diesem drehbar gelagerten Exzenterrad (10) mit einer Verzahnung (11), die mit einer Verzahnung (14) eines Mitnehmers (15) durch abschnittsweises Ineinandergreifen zusammenwirkt, wobei ferner das Exzenterrad (10) Führungselemente (18, 19) aufweist, die in einem feststehenden und einteilig ausgeführten Gehäuseteil (6) mittelbar oder unmittelbar in Aufnehmungen (106, 108) geführt sind, **dadurch gekennzeichnet, daß** die Aufnehmungen (106, 108) in dem Gehäuseteil (6) schwingfähig angeordnet sind.

2. Vorrichtung nach Anspruch 1, **dadurch gekennzeichnet, daß** das Gehäuseteil einen inneren Bereich (100) mit den Aufnehmungen (106, 108), einen mittleren Bereich (102) und einen fest mit dem übrigen Gehäuse verbundenen äußeren Bereich (104) aufweist.

3. Vorrichtung nach Anspruch 2, **dadurch gekennzeichnet, daß** der innere Bereich (100) und der mittlere Bereich (102) gegen den äußeren Bereich (104) um aufeinander senkrecht stehende Achsen schwingfähig angeordnet ist.

4. Vorrichtung nach Anspruch 3, **dadurch gekennzeichnet, daß** der innere Bereich (100) mit dem mittleren Bereich (102) bzw. der mittlere Bereich (102) mit dem äußeren Bereich (104) über deformierbare Bereiche (112) verbunden ist.

5. Vorrichtung nach Anspruch 4, **dadurch gekennzeichnet, daß** die deformierbaren Bereiche (112) durch Aussparungen (114) gebildet werden, die zwischen dem inneren Bereich (100) und dem mittleren Bereich (102), bzw. dem mittleren Bereich (102) und dem äußeren Bereich (104) angeordnet sind.

6. Vorrichtung nach einem der Ansprüche 4 oder 5, **dadurch gekennzeichnet, daß** die deformierbaren Bereiche (112) eine längliche Ausdehnung besitzen, vorzugsweise durch beidseitig angeordnete Aussparungen (114) balkenähnlich ausgebildet sind.

7. Vorrichtung nach einem der Ansprüche 4 bis 6, **dadurch gekennzeichnet, daß** die deformierbaren Bereiche (112) zwischen dem inneren Bereich (100) und dem mittleren Bereich (102) und die deformierbaren Bereiche (112) zwischen dem mittleren Bereich (102) und dem äußeren Bereich (104) quer zueinander angeordnet sind.

8. Vorrichtung nach einem der Ansprüche 4 bis 7, **dadurch gekennzeichnet, daß** die Enden der deformierbaren Bereiche (112) Verjüngungen (116) aufweisen.

9. Vorrichtung nach Anspruch 1, **dadurch gekennzeichnet, daß** das Gehäuseteil einen inneren Bereich (100) mit den Aufnehmungen (106, 108), und einen fest mit dem übrigen Gehäuse verbundenen äußeren Bereich (104) aufweist.

10. Vorrichtung nach Anspruch 9, **dadurch gekennzeichnet, daß** der innere Bereich (100) gegen den äußeren Bereich (104) bzw. die Aufnehmungen (106, 108) gegen den inneren Bereich (100) um aufeinander senkrecht stehende Achsen schwingfähig angeordnet sind.

11. Vorrichtung nach Anspruch 10, **dadurch gekennzeichnet, daß** der innere Bereich (100) mit dem äußeren Bereich (104) bzw. die Aufnehmungen (106, 108) mit dem inneren Bereich (100) über deformierbare Bereiche (112) verbunden sind.

12. Vorrichtung nach Anspruch 11, **dadurch gekennzeichnet, daß** die deformierbaren Bereiche (112) durch Aussparungen (114) gebildet werden, die zwischen dem inneren Bereich (100) und dem äußeren Bereich (104) angeordnet sind.

13. Vorrichtung nach einem der Ansprüche 11 oder 12, **dadurch gekennzeichnet, daß** die deformierbaren Bereiche (112) eine längliche Ausdehnung besitzen, vorzugsweise balkenähnlich ausgebildet und beidseitig von Aussparungen (114) begrenzt sind.

14. Vorrichtung nach einem der Ansprüche 11 bis 13, **dadurch gekennzeichnet, daß** die mit den Aufnehmungen (106, 108) verbundenen deformierbaren Bereiche (112) und die nicht mit den Aufnehmungen (106, 108) verbundenen deformierbaren Bereiche (112) quer zueinander angeordnet sind.

15. Vorrichtung nach einem der Ansprüche 11 bis 14, **dadurch gekennzeichnet, daß** die Enden der deformierbaren Bereiche (112) Verjüngungen (116) aufweisen.

## Claims

1. Eccentric toothed gearing, having a rotary drive (3) with an eccentric (8), an eccentric wheel (10) which is rotatably mounted on it and has a toothing (11) which interacts with a toothing (14) of a driver (15) by engaging one in the other in certain sections, the eccentric wheel (10) also having guide elements (18, 19) which are guided indirectly or directly in mounts (106, 108) in a fixed housing part (6) which is formed in one piece, **characterized in that** the mounts (106, 108) are arranged in the housing part (6) so as to be capable of oscillating.

2. Device according to Claim 1, **characterized in that** the housing part has an internal region (100) with the mounts (106, 108), a central region (102) and an external region (104) which is permanently connected to the rest of the housing.

3. Device according to Claim 2, **characterized in that** the internal region (100) and the central region (102) are arranged so as to be capable of oscillating against the external region (104) about the axes which are perpendicular to one another.

4. Device according to Claim 3, **characterized in that** the internal region (100) is connected to the central region (102), and the central region (102) is connected to the external region (104), by means of deformable regions (112).

5. Device according to Claim 4, **characterized in that** the deformable regions (112) are formed by cutouts (114) which are arranged between the internal region (100) and the central region (102) or the central region (102) and the external region (104).

6. Device according to one of Claims 4 or 5, **characterized in that** the deformable regions (112) have an elongate extent, and are preferably formed in a way similar to bars by means of cutouts (114) arranged on each side.

7. Device according to one of Claims 4 to 6, **characterized in that** the deformable regions (112) between the internal region (100) and the central region (102), and the deformable regions (112) between the central region (102) and the external region (104), are arranged transversely with respect to one another.

8. Device according to one of Claims 4 to 7, **characterized in that** the ends of the deformable regions (112) have tapering sections(116).

9. Device according to Claim 1, **characterized in that** the housing part has an internal region (100) with the mounts (106, 108), and an external region (104) which is permanently connected to the rest of the housing.

10. Device according to Claim 9, **characterized in that** the internal region (100) is arranged so as to be capable of oscillating with respect to the external region (104), and the mounts (106, 108) are arranged so as to be capable of oscillating with respect to the internal region (100), about axes which are perpendicular to one another.

11. Device according to Claim 10, **characterized in that** the internal region (100) is connected to the external region (104), and the mounts (106, 108) are connected to the internal region (100) by means of deformable regions (112).

12. Device according to Claim 11, **characterized in that** the deformable regions (112) are formed by cutouts (114) which are arranged between the internal region (100) and the external region (104).

13. Device according to one of Claims 11 or 12, **characterized in that** the deformable regions (112) have an elongate extent, and are preferably formed in a way similar to bars, and are limited on both sides by cutouts (114).

14. Device according to one of Claims 11 to 13, **characterized in that** the deformable regions (112) which are connected to the mounts (106, 108), and the deformable regions (112) which are not connected to the mounts (106, 108), are arranged transversely with respect to one another.

15. Device according to one of Claims 11 to 14, **characterized in that** the ends of the deformable regions (112) have tapering sections (116).

## Revendications

1. Transmission par engrenages à excentrique qui présente un entraînement rotatif (3) avec un excentrique (8), une roue d'excentrique (10) placée de façon à pouvoir tourner sur celle-ci, avec un engrènement (11) qui agit conjointement avec un engrènement (14) d'un entraîneur (15) au moyen d'une prise par engrènement discontinue, la roue d'excentrique (10) présentant en outre des éléments de guidage (18, 19) qui sont guidés directement ou indirectement dans des réceptions (106, 108) dans une pièce de boîtier (6) fixe et réalisée en une pièce,
**caractérisée en ce que**
les réceptions (106, 108) sont placées de façon à pouvoir pivoter dans la pièce de boîtier (6).

2. Dispositif selon la revendication 1,
**caractérisé en ce que**
la pièce de boîtier présente une zone intérieure (100) avec les réceptions (106, 108), une zone médiane (102) et une zone extérieure (104) qui est solidement reliée avec le reste du boîtier.

3. Dispositif selon la revendication 2,
**caractérisé en ce que**
la zone intérieure (100) et la zone médiane (102) sont placées de façon à pouvoir pivoter contre la zone extérieure (104) autour d'axes placés perpendiculairement l'un par rapport à l'autre.

4. Dispositif selon la revendication 3,
**caractérisé en ce que**
la zone intérieure (100) est reliée à la zone médiane (102) ou la zone médiane (102) à la zone extérieure (104) par l'intermédiaire de zones déformables (112).

5. Dispositif selon la revendication 4,
**caractérisé en ce que**
les zones déformables (112) sont formées par des évidements (114) qui sont placés entre la zone intérieure (100) et la zone médiane (102) ou entre la zone médiane (102) et la zone extérieure (104).

6. Dispositif selon l'une des revendications 4 ou 5,
**caractérisé en ce que**
les zones déformables (112) possèdent une extension longitudinale de préférence sont formées en forme de poutre par des évidements (114) placés de chaque côté.

7. Dispositif selon l'une des revendications 4 à 6,
**caractérisé en ce que**
les zones déformables (112) entre la zone intérieure (100) et la zone médiane (102) et les zones déformables (112) entre la zone médiane (102) et la zone extérieure (104) sont placées en travers les unes par rapport aux autres.

8. Dispositif selon l'une des revendications 4 à 7,
**caractérisé en ce que**
les extrémités des zones déformables (112) présentent des rétrécissements (116).

9. Dispositif selon la revendication 1,
**caractérisé en ce que**
la pièce de boîtier présente une zone intérieure (100) avec les réceptions (106, 108) et une zone extérieure (104) liée solidement avec le reste du boîtier.

10. Dispositif selon la revendication 9,
**caractérisé en ce que**
autour d'axes disposés perpendiculairement l'un au-dessus de l'autre, la zone intérieure (100) est placée de façon à pouvoir pivoter contre la zone extérieure (104) ou les réceptions (106, 108) contre la zone intérieure (100).

11. Dispositif selon la revendication 10,
**caractérisé en ce que**
la zone intérieure (100) est reliée à la zone extérieure (104) ou les réceptions (106, 108) à la zone intérieure (100) par l'intermédiaire de zones déformables (112).

12. Dispositif selon la revendication 11,
**caractérisé en ce que**
les zones déformables (112) sont formées par des évidements (114) qui sont placés entre la zone intérieure (100) et la zone extérieure (104).

13. Dispositif selon l'une des revendications 11 ou 12,
**caractérisé en ce que**
les zones déformables (112) possèdent une extension longitudinale, sont de préférence formées en forme de poutre et limitées des deux côtés par des évidements (114).

14. Dispositif selon l'une des revendications 11 à 13,
**caractérisé en ce que**
les zones déformables (112) reliées aux réceptions (106, 108) et les zones déformables (112) non reliées aux réceptions (106, 108) sont placées en travers les unes par rapport aux autres.

15. Dispositif selon l'une des revendications 11 à 14,
**caractérisé en ce que**
les extrémités des zones déformables (112) présentent des rétrécissements (116).
